(19) Europäisches Patentamt European Patent Office Office européen des brevets

(11) **EP 4 662 992 A1**

(12) **EUROPEAN PATENT APPLICATION**

(43) Date of publication:
**17.12.2025 Bulletin 2025/51**

(21) Application number: **25182484.3**

(22) Date of filing: **12.06.2025**

(51) International Patent Classification (IPC):
**A01B 45/02** *(2006.01)*

(52) Cooperative Patent Classification (CPC):
**A01B 45/023**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **13.06.2024 IT 202400013576**

(71) Applicants:
• **Ballerini, Valerio**
  **60044 Fabriano AN (IT)**

• **Meloni, Stefano**
  **60044 Fabriano AN (IT)**

(72) Inventors:
• **Ballerini, Valerio**
  **60044 Fabriano AN (IT)**
• **Meloni, Stefano**
  **60044 Fabriano AN (IT)**

(74) Representative: **Mar.Bre S.r.l.**
**Via San Filippo, 2**
**60044 Fabriano (AN) (IT)**

(54) **MACHINE FOR SOIL AERATION**

(57) Object of the present invention is an agricultural machine for soil aeration, described in its basic configuration (310) and in some execution variants (320, 330, 340, 350, 360) depending on some of the possible kinematic mechanisms (200) used.

The basic feature is that the kinematic mechanism (200) comprises at least one pin (202) having a horizontal axis, to which a corresponding aerating tool (1; 110) is idle coupled; the kinematic mechanism (200) moves the at least one pin (202) along a predefined path that brings the aerating tool (1, 110) to a first position (202') where, subject only to the force of gravity, it grazes the ground with its tip (V), then to a subsequent position (202") in which it is driven into the ground, where it creates a fulcrum (F) that becomes a carriage with hinge-type constraint, and then to a third position (202''') in which it is extracted from the ground again.

Fig. 2

EP 4 662 992 A1

## Description

The object of the present invention is an equipment for the aeration of cultivated soils of any type.

The invention therefore falls within the field of agricultural machines that perform soil working.

These agricultural machines, more properly called operating machines, can perform soil treatment operations in various possible ways: e.g., because they are self-propelled or towed or semi-mounted or mounted; those that do not have their own wheels can obtain information on their advancement speed from the rotational speed of the power take-off shaft of the carrying tractor. Many operating machines do not require information about their movement speed; for example, plows, harrows, hoes, mowers are tools that correctly perform the intended operations independently of the movement speed and are here referred to as "continuous operating machines." Others, such as seeders or, in general, machines for the distribution of fertilizers, pest control substances, or other materials, must perform the operation with a precise intensity or cyclical cadence linked to the amount of advancement on the soil because the quantity of substance to be deposited must be proportional to the amount of soil covered and, sometimes, deposited at constant intervals. These machines, which perform operations with cyclical cadence, and are referred to here as "cyclical operating machines," must perform their cycle at a speed linked to the advancement speed and are therefore driven by a mechanical connection which, in various possible ways, is linked to the rolling speed of their wheels (self-propelled or towed machines) or those of the towing vehicle (mounted machines).

An important operation, not only in a vegetable garden or lawn but also in extensive fields, is the loosening/lifting of the soil to aerate the plant roots, for example in vineyards, but also simply to promote processes of decompaction and/or moistening of the soil itself. However, for such operation, there are not very satisfactory tools, almost all consisting of rollers or shafts with a horizontal axis orthogonal to the direction of movement and bearing radially, at a fair distance from each other, blades or teeth 5 to 10 cm long at most that pierce the soil. Each blade enters edgewise, is rotated by its engagement in the soil, and exits, still edgewise, after a rotation in the soil of just under 180°. A scarification that cuts the soil is actually obtained. Aeration is achieved, but only near each blade and rather close to the surface, moreover all roots encountered by the blades are cut or heavily damaged.

Even subsoilers (including rippers), executing parallel cuts of the soil even deeply, and often also equipped with anchors (horizontal blades at the bottom of the vertical blades), ensure aeration but limited to the cutting lines and in any case severing all the roots they encounter.

Machines commonly called "aerators" also include agricultural machines, mostly used on lawns and permanent pastures, which have more or less elastic teeth or fixed or oscillating blades mounted on a horizontal rotation shaft. These machines have the effect of "harrowing" (with flexible teeth) or making small cuts in the soil to remove dry grass residues that accumulate on its surface, allowing greater oxygenation of the surface layer. These machines should more properly be classified among harrows (those with elastic teeth) or among subsoilers (those with fixed or oscilling blades) since they either do not affect the soil or make cuts of a few centimeters (usually not more than 3 cm). They therefore do not achieve the purpose of aerating the soil also in depth (at least 30 cm) without mixing or overturning it and causing the minimum possible damage to the root systems present.

Documents D1 (US 5 207 378), D2 (US 4 819 734), D3 (US 9 357 687 B2), D4 (US 3 802 513), D5 (WO 02/094000 A1), D6 (US 2 068-328), D7 (US 1 091 031) show manual or even motorized aerators but suitable only for domestic use on small plots of land, such as garden or vegetable patch surfaces, and it seems difficult to use their principles on larger machines. These documents, however, do not contain teachings suitable to achieve the purposes of the invention that will be described.

Very effective, instead, is the "digging fork," a manual tool that is used approximately like a spade: instead of the spade blade it has a fork with preferably straight tines that must be stuck into the soil approximately vertically and then slightly rotated using the edges of the perforations made by the tines as a lever; these edges act as a fulcrum. After this maneuver, the operator removes the tool by pulling it out from the opening made without overturning the soil that has been loosened but leaving it slightly lifted. How much to loosen/lift the soil before withdrawing/pulling out the tines depends on the experience and sensitivity of the operator, who must stop the operation when they feel they are about to tear the roots of cultivated plants or after having caused tolerable or even desired tears in such roots.

The angle of rotation of the tines from their entry into the soil to their withdrawal is here called a "fan" due to the shape of its cross-section. Often only about 15° of fan is sufficient for the aeration of cultivated plant roots.

Naturally, the manual digging fork can only be used for the small dimensions of a home garden or in flowerbeds of a garden. Nor can a manual operation of inserting the fork beyond about 30 cm be required.

A first objective of the invention is to indicate means to mechanize and automate the aeration operation in a manner similar to that performed with the manual digging fork, that is to say by lifting a part of the soil without removing it from its place or overturning it.

A second objective, at least of some variants of the invention, is to indicate economical means that are not adjustable to loosen/lift the soil by a predefined amount.

A third objective, at least of some variants of the invention, is to indicate adjustable means to loosen/lift the soil by an amount chosen by the operator within useful limits for various types of soil and crops.

Further results and advantages of the present invention, consisting of an aerator machine, will become more evident from the following description of a basic version in accordance with the main claims and of some preferred variants in accordance with the dependent claims, all illustrated, by way of non-limiting example, in the attached drawing sheets, in which:

Fig. 1 shows, in images from Fig. 1a to 1i, various views of the manual digging fork followed by details of forks used according to the invention;
Figs. 2a to 2d show, schematically, the essential features of the aerator machine according to the invention;
Figs. 3a to 3f highlight some general kinematic characteristics related to the geometry and advancement speed of the aerator machine according to the invention;
Figs. 4a to 4e show as many phases of the cyclical movement of an aerator machine according to a first variant of the invention;
Figs. 5a to 5e show the same phases of the first variant of the invention but with different kinematic ratios between the components of the aerator machine of the invention;
Figs. 6a to 6c show evolutions of the aerator machine according to the first variant of the invention and their kinematic behavior;
Figs. 7a to 7d show a further evolution of the aerator machine according to the first variant of the invention and its kinematic behavior;
Figs. 8a to 8f show a second variant of the invention;
Figs. 9a to 9f show an evolution of the second variant of the invention;
Figs. 10a to 10d show a further evolution of the second variant of the invention with enhanced adjustability;
Fig. 11 shows a third variant of the invention;
Figs. 12a to 12f show the cycle phases of the third variant of the invention;
Figs. 13 and 14 show a fourth variant of the invention in a first and a second execution with geometries that differ from each other in dimensional ratios;
Figs. 15a to 15d show the kinematic behavior of the machine of Fig. 13;
Figs. 16a to 16d show the kinematic behavior of the machine of Fig. 14;
Figs. 17a to 17e show a fifth variant of the invention and its kinematic behavior;
Figs. 18a to 18f show six possible construction variants of details of a component present in all variants of the invention.

The aerator machines according to the invention use aerators, hereinafter often referred to simply as "aerator tools," entirely similar, at least in principle, to the manual digging fork.

In the figures, all kinematic mechanisms are drawn schematically in order to highlight only their kinematic characteristics. The dimensional characteristics of the kinematic elements are indicated in the form of a ratio with the tine length $hR$ of the aerator tools used. As for the actual value of the length $hR$, it is up to the skilled person to determine it.

For all illustrated construction variants, the kinematic movements during the execution of the cycle are shown. For many of the illustrated variants, especially the first ones, this occurs in individual images representing the instantaneous position of the essential elements at constant time intervals of the entire cycle. For other variants, a single image has, superimposed, the positions of the essential elements always at constant time intervals of the cycle.

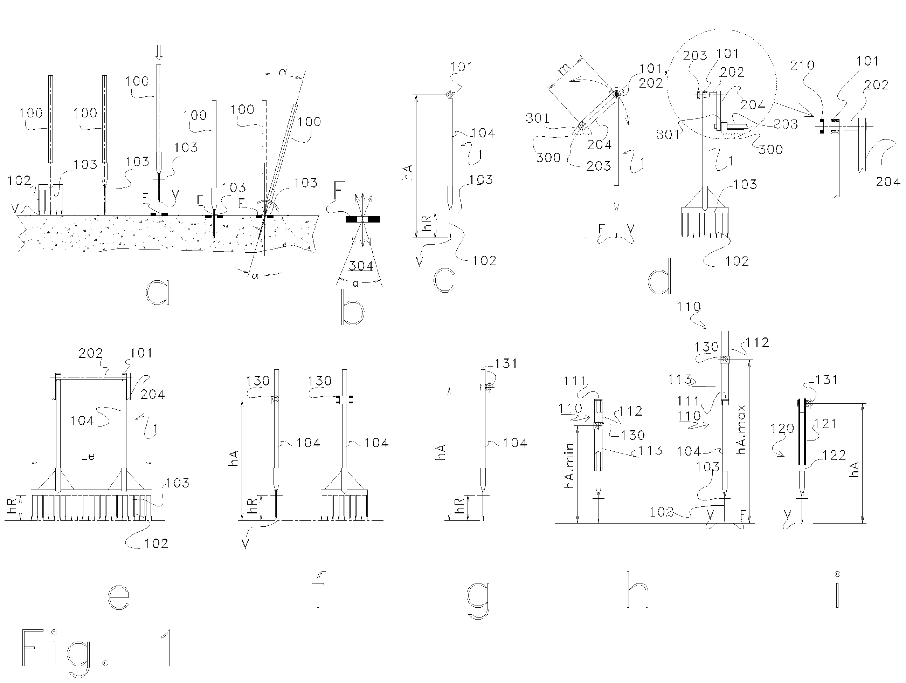

In Fig. 1a, from left to right, a manual digging fork 100 is first shown frontally, just resting on the ground with the tip V, equipped with flat tines 102 up to the hilt 103. A side view of the same fork 100 follows, where the position of the hilt 103, invisible from the side, is still indicated by a transverse line 103. Since in almost all the figures the aerator tools are shown from the side and schematically, the line 103 will always be present to indicate where the tines 102 end. In the same Fig. 1a, the manual digging fork 100 is then shown in the sequence of positions for aeration: first approximately vertical as the operator (not shown) is about to insert its tip V at a point on the ground that will become a fulcrum F (see below); then inserted substantially up to the hilt 103 at the fulcrum F, and finally rotated by the operator by an angle using the fulcrum F as a lever.

Fig. 1b shows the graphic symbol used in the following figures to represent the fulcrum F in which the tip V is embedded and at which the manual digging fork 100 then penetrates, sliding and rotating during the aeration operation performed by the operator. The fulcrum F is thus hypothesized as a constraint naturally created by the ground at the point where the tip V is embedded and which allows the insertion and sliding of the tines 102, preferably straight, substantially up to the hilt 103 but does not allow their horizontal translation; ultimately, a constraint that prevents the tines 102 from translating horizontally to form undesired furrows or compressions on the surface, but instead induces these tines 102 to rotate forming a sort of fan 304 of angular width . It is clear that the fulcrum F, to be imagined as a rotation axis on the surface of the soil, parallel to the plane of the tines 102, is a theoretical simplification of reality: if the surface of the soil has a kind of crust compared to a more yielding underlying layer, the simplification is substantially valid; if, on the contrary, the surface soil is more yielding than in depth, the rotation center will be created lower than the surface and the tines 102 may create furrows or surface compressions. This second soil condition is, however, of lesser interest because if the surface does not have a crust but is yielding, it means that it has already been recently worked in other ways (e.g., with hoeing) which, although damaging the roots, have already loosened and aerated the soil. Therefore, the invention about to be described applies particularly to soils to be aerated because their surface is rather compact and thus also suitable to substantially allow the formation of the surface fulcrum F. In any case, the surface fulcrum F is symbolized so as to indicate not an exact rotation axis but a small band parallel to the theoretical rotation axis of the tines 102 to indicate that their rotation takes place in that zone.

Also, the angular width $\alpha$ indicated in the following figures is a theoretical simplification; it is measurable substantially as the angle between the direction of initial penetration of the tip V into the ground and the extraction direction of the aerator tools 1, 110 and is greater than the effective width $\alpha'$ (not shown in the figures) which is $< \alpha'$ and which effectively performs a soil lifting sufficient to aerate. The actual extension of the effective width $\alpha'$ could only be defined arbitrarily. However, the width $\alpha$ is an index of the effective width $\alpha'$.

In Fig. 1c, of a first variant of the aerator tool 1 according to the aerator machine of the invention, are shown the rod 104 connecting the tines 102, straight, to a rotation bearing 101, the length hR of the tines 102, and the length hA from the tip V of the tines 102 to the center of the bearing 101. The bearing 101 is intended to engage a pin that is part of the aerator machine. Except for the presence of the bearing 101 or its variants (see below), the aerator tool 1 can be, in many variants, identical to the manual digging fork 100.

Fig. 1d shows the same aerator tool of Fig. 1c. The aerator tool 1 is always constrained in a idle coupling consisting of the bearing 101 coupled to a pin 202 with a horizontal axis and orthogonal to the direction of movement of the frame 300 of the aerator machine around which it is free to rotate. It is clear that the coupling of the bearing 101 with the pin 202 can always be replaced by a idle coupling pin 101 and bearing 202 of which it is a technical equivalent. Henceforth, therefore, it will often be preferred to speak generically of hinge 101, 202.

Also in Fig. 1d, of the first variant 1 of the aerator tool, an example of such loose hinge 101, 202 is shown, which couples an aerator tool 1 to a crank 204 of arm m and keyed to a shaft 203 loosely constrained to the frame 300 of a generic aerator machine (see below) by a bearing 301. The aerator tool 1 is shown in a vertical position with the tip V just touching the ground about to pierce it, creating a fulcrum F.

To prevent the bearing 101 from sliding off the pin 202 in any hinge 101, 202, a locking ring 210 can be provided, never shown in the subsequent figures but always intended to be present as such or to be substituted by other equivalent means 210 that prevent detachment.

Fig. 1f shows a possible sliding collar bearing 130 that can be fixed along any point of the rod 104 of any variant of an aerator tool 1, 110 (see below) to adjust the distance hA within two limit values hA max and hA min before switching to operating conditions.

Fig. 1g shows a possible eccentric sliding collar bearing 131 that can be fixed along the rod 104 of any aerator tool 1, 110 (see below) to adjust/calibrate the distance hA within two limit values hA max and hA min (see Fig. 1h) before switching to operating conditions.

Fig. 1h shows the already indicated variant 110 of the aerator tool alternative to the aerator tool 1: a jack-type aerator tool 110 whose distance hA between the tip V and the generic bearing 101 or 130 or 131 (130 in the figure) is modified while the aerator machine is in operating conditions, from a value hA min to a value hA max. This is achieved because the aerator tool 110 comprises a jack 113 aligned with the rod 104, whose essential parts are a piston 111 constrained to the top of the same rod 104 and a cylinder 112 to which the bearing 101, 130 or 131 is constrained and which is in turn idle coupled to a pin 202 fixed to the frame 300 (see below). The position of the piston 111 in the cylinder 112 is adjusted by a hydraulic fluid. To form a fulcrum F at a desired point, it is sufficient to bring the tip V perpendicular above the point where the tines 102 are to be inserted and then increase the distance hA by the necessary amount.

In Fig. 1i, a threaded adjustable aerator tool 120 is shown where the rod 104 is replaced by a threaded rod 122 that is screwed into a threaded tubular element 121 so that the distance hA between the tip V and the bearing (131, in the figure) can be adjusted before the aerator machine is placed in operating conditions. Since this aerator tool 120 has nothing particular compared to the aerator tool 1 except for the possibility of adjusting the distance hA, it will no longer be mentioned, except where explicitly referred to, considering the possibility of adjusting the distance hA an obvious potential feature of the aerator tool 1 or 110.

In Fig. 1e, it is shown how a generic aerator tool 1, 110 may have a tine row width Le much greater than possible in a manual digging fork 100 and may be equipped with more than one rod 104 and as many bearings 101, 130, or 131. These features will no longer be mentioned in the following, as they are considered implicit in a generic aerator tool 1, 110, 120 according to the invention and without any effect from the kinematic point of view.

In all aerator tools according to the invention, the tines 102 are preferably flat and coplanar with the axis of rod 104.

The objective is to obtain, with the aerator tools 1, 110, a fan 304 of the desired shape and dimensions and with the desired pitch between two successive fulcrums F.

According to the invention, the generic aerator tools 1, 110 perform aeration because they are moved by specific kinematic mechanisms 200 according to many possible variants, all aimed at allowing the aerator tools 1, 110 to be cyclically positioned in a vertical or near-vertical position, moved only by gravity, with the tip V grazing the ground, then to embed in the soil substantially up to the hilt 103, to rotate and translate around the fulcrum F formed by them, and then to be pulled out of the ground again.

The quantities hR and hA, hA min and hA max are the only ones that determine the kinematic behavior of the aerator tool 1 or 110 and from now on will also be referred to as "kinematic quantities."

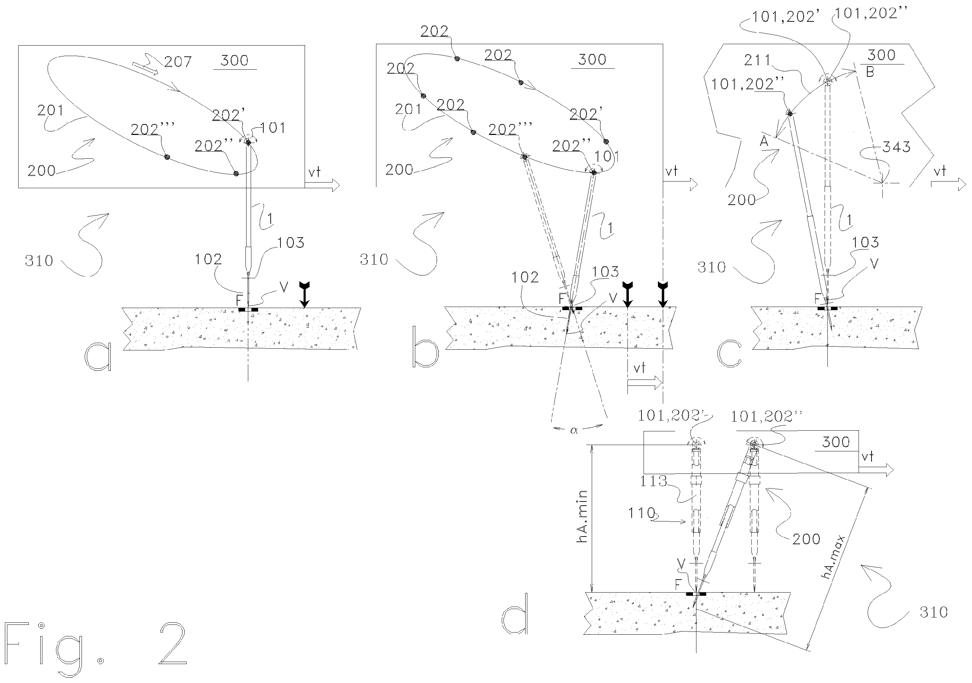

In Figures 2a to 2b, the kinematic mechanism 200 is directly constrained to the frame 300 and moves one or more pins 202, to which one or more aerator tools 1 are idle coupled, along a path consisting of a cyclic orbit 201.

Figure 2b shows, on the closed orbit 201, a plurality of pins 202 equidistant from each other. The figure can be interpreted either as a representation of a plurality of positions of a single pin 202 at constant time intervals, or as a representation of a plurality of equidistant pins 202 shown at a given moment. In the first case, the duration $\Delta t$ of the cycle is equal to the time required for the single pin 202 to return to the same position of the previous cycle; in the second case, equal to the time required for any of the present pins 202 to reach the position previously held by the preceding pin 202.

Also in Figure 2c, the kinematic mechanism 200 (whose mechanical details are not shown) is directly constrained to the frame 300, but the pin 202 is unique and guided along a cyclical alternating path 211 from one end A to the other B and vice versa along an open line 211.

In Figures 2a to 2c, three consecutive positions of a generic pin 202 are shown:

- an initial position 202', in which the corresponding aerator tool 1 has been brought by the kinematic mechanism 200 to a vertical position with the tip V grazing the ground,
- then to a generic second position 202" (between the initial position 202' and a subsequent final position 202''') where the tines 102 are embedded in the ground to a maximum extent; by generic second position 202" is meant any intermediate position, in which the tines 102 are embedded in the ground,
- and finally to the final position 202''' with the tines 102 pulled out of the ground again.

In Figure 2d, instead, which shows the movement of a jack-type aerator tool 110 with jack 113, one or more pins 202 are directly constrained to the frame 300 while the kinematic mechanism 200 consists of the jack 113 itself which cyclically brings the height hA from value hA min to value hA max and vice versa, and simultaneously the one or more pins 202 from an initial position 202' where hA = hA min and the tip V grazes the ground, to a final position 202''' where hA = hA max, and immediately after the tines 103 are again extracted from the ground and the tip V returns to graze it.

In Figure 2c, the movement of the only possible aerator tool 1 relative to the frame 300 is shown.

In Figures 2a, 2b, and 2d, the movements of the aerator tool 1 are shown relative to the ground.

In Figures 2a and 2d, as in all that follow, the forward speed vt of the aerator machine is, by way of example, always shown oriented from left to right. The movement path of the pins 202 along an orbit 201 is always in counterclockwise direction 207, also by way of non-limiting example. Various speeds of movement of the pins 202, with all other conditions equal, particularly the speed vt, result in completely different fans 304 whose analysis is nonetheless within the skill of the art. To study the shape of the fan 304 and the distance or pitch between one fulcrum F and the next, one must examine the absolute movement of the aerator tools 1, 110 with respect to the ground, combining their relative movement with respect to the frame 300 and the absolute movement of the frame 300 with respect to the ground. This can be done by a skilled technician using graphical methods or software dedicated to the study of kinematic mechanism movements. Preferably, the proportionality ratio between the cycle execution speed and the forward speed vt is adjustable because it also has a considerable effect on the actual movement of a generic aerator tool 1, 110 with respect to the ground and thus on the shape of the fan 304 at a fulcrum F and on its distance from the next.

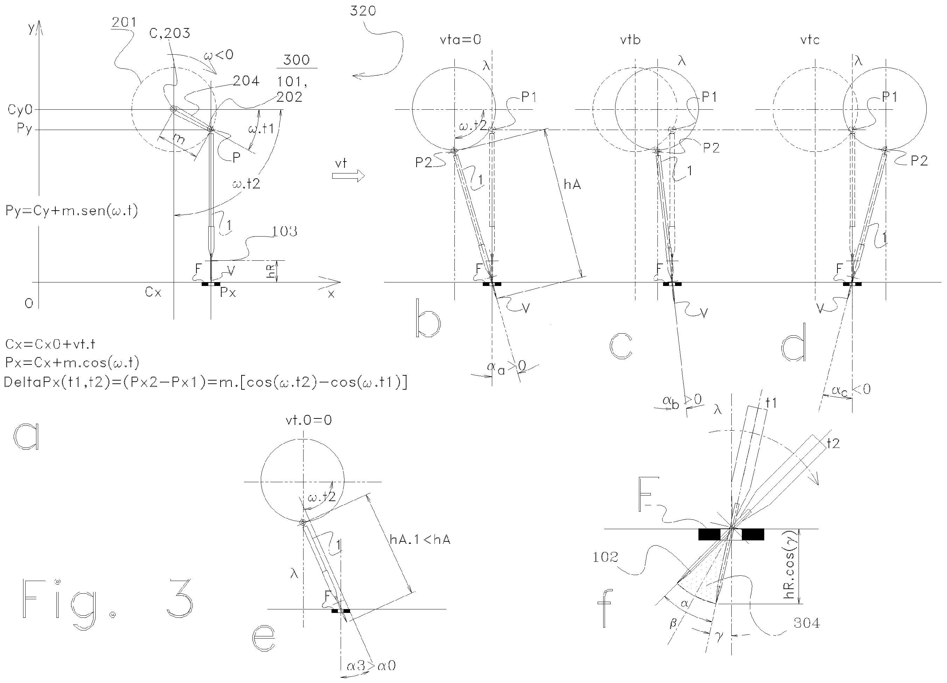

Figures 3a to 3f highlight such differences in the shape of the fan 304 as the speed vt and the distance hA vary. Obviously, a variation in the cycle speed and the speed vt in the same ratio does not produce any change in the shape of the fan 304, only a faster or slower and more or less accurate execution.

Figure 3a shows an aerator machine of a type here referred to as crank-type 320 which, due to its simplicity, is well-suited to examine some general characteristics of the fans 304 formed by the aerator tools 1 moved along a closed orbit.

Indeed, however complex and varied a closed orbit trajectory 201 of the hinge 101, 202 may be, it always includes a portion in which the generic aerator tool 1 is brought into the consecutive positions 202', 202'', 202''' shown in Fig. 2b with movements similar to those circularly imposed by a crank 204.

In the example of Figure 3a, where the parameters assumed are only illustrative and non-limiting, there is a single aerator tool 1 coupled to the end of a crank 204 via a hinge 101, 202 at point P. The crank 204 is in turn idle coupled to the frame 300 at a point C and keyed to a drive shaft 203 from which it receives torque. This rotates the crank clockwise with angular speed $\omega < 0$ along the circular orbit 201 of radius m. The frame 300 in turn moves forward with horizontal speed vt > 0. Assuming time counting starts at instant to = 0 when point P is at the same height as point C with coordinates Cxo and Cyo and to its right (i.e., with coordinates Px = Cxo + m and Cyo = constant), at a generic later time t the coordinates of point

C are:

$$Cx(t) = Cx_0 + vt \cdot t \; ;$$

$$Cy(t) = Cy_0 = \text{constant}$$

while the coordinates of point P are:

$$Px(t) = Cx(t) + m \cdot \cos(\omega\, t) = Cx_0 + vt\, t + m \cdot \cos(\omega\, t)$$

$$Py(t) = Cy_0 + m \cdot \sin(\omega\, t)$$

At instant $t_1$ the crank 204 has brought the tip V to graze the ground, and the coordinates of P are:

$$Px(t_1) = Cx_0 + vt \cdot t_1 + m \cdot \cos(\omega\, t_1)$$

$$Py(t_1) = Cy_0 + m \cdot \sin(\omega \cdot t_1)$$

At instant $t_2$ the crank 204 has completed a rotation of $\omega\, t_2 = -\pi/2$ and would have driven the aerator tool 1 into the ground substantially up to the hilt 103 if point C in the meantime had not advanced by the amount $\Delta Cx(t_1, t_2) = vt\, (t_2 - t_1)$. In any case, the formation of a fan 304 has begun. The coordinates of P become:

$$Px(t_2) = Cx_0 + vt \cdot t_2 + m \cdot \cos(-\pi/2) = Cx_0 + vt \cdot t_2$$

$$Py(t_2) = Cy_0 + m \cdot \sin(-\pi/2) = Cy_0 - m$$

The horizontal displacement of point P from $t_1$ to $t_2$ is therefore:

$\Delta Px(t_1, t_2) = Px(t_2) - Px(t_1) = Cx_0 + vt \cdot t_2 - [Cx_0 + vt\, t_1 + m \cos(\omega\, t_1)] = = vt\, (t_2 - t_1) - m \cos(\omega\, t_1)$

If $\Delta Px(t_1, t_2)$ is negative, i.e., if:

$$vt(t_2 - t_1) - m \cos(\omega\, t_1) < 0$$

which is if

$$vt < m \cos(\omega \cdot t_1) \,/\, (t_2 - t_1)$$

then during the advancement of point C from instant $t_1$ to instant $t_2$, point P has moved backward relative to C and the rotation of the aerator tool 1 on the fulcrum F occurs counterclockwise; otherwise, it is clockwise.
Figures 3b to 3d show how the fan 304 is formed when moving from $t_1$ to $t_2$ with the same angular speed $\omega$ but with three different advancement speeds vt. Specifically:

    A. Figure 3b represents the theoretical case where vt = vta = 0, i.e., the figure shows only the relative motion of an aerator tool 1 with respect to the frame 300.

The x-coordinate Cx remains = Cx0 while the x-coordinate of Px becomes $Px(t_2) = Cx_0 - m$.
The aerator tool 1 rotates on the fulcrum F in a counterclockwise direction because point P moves backward relative to point C. A fan 304 of width a is formed entirely to the right of the vertical axis $\lambda$ passing through the fulcrum F.
B. Figure 3c is the case where vt = vtb > 0 but still such that:

$$vt_b < m \cos(\omega\, t_1) / (t_2 - t_1)$$

During the period from $t_1$ to $t_2$, the position P2 of point P still moves backward relative to position P1. A fan 304 of width b is still formed entirely to the right of the vertical axis $\lambda$, but of width b less than a.

C. - Figure 3d is the case where vt = vtc such that:

$$vt_c > m \cos(\omega\, t_1) / (t_2 - t_1)$$

During the period from $t_1$ to $t_2$, the position P2 advances relative to position P1. The resulting fan has width $\alpha_c$ straddling the vertical axis $\lambda$ but shifts entirely to the left of the axis for increasing values of vt, as shown in Fig. 3f.

Figure 3e, to be compared with Figure 3b, shows that, all other conditions being equal, $\alpha_3 > \alpha_0$ is valid if $hA_1 < hA$.

Figure 3f shows the substantial profile of a fan 304 of angular width $\alpha$, axis $\beta$, formed from an instant $t_1$ in which the tines 102 are fully embedded in the soil up to the hilt 103, to the subsequent moment $t_2$ after which they begin to be withdrawn. If the fan 304 of angular width $\alpha$ is formed entirely on one side of the vertical axis $\lambda$, with the edge closest to the vertical itself forming an angle $\Upsilon$ with it, the tines 102 penetrate the soil by an amount less than hR, equal to $hR \times \cos(\Upsilon)$. It is preferred that the fan does not form straddling the vertical axis $\lambda$ but to one side of it in order to lift the soil more easily.

Naturally, in practice, the value of vt will always be set to the maximum achievable in the field in order to perform the aeration operation as quickly as possible, and therefore, if it is desired to obtain $vt_c > m \times \cos(\omega\, t_1) / (t_2 - t_1)$, the angular speed $\omega$ is increased; in fact, $\cos(\omega\, t_1)$, in the interval between $t_1$ and $t_2$ as defined, decreases as $\omega$ increases. A high angular speed also shortens the cycle time, increasing the density of fulcrums F.

In conclusion, the kinematic mechanism 200 used to perform soil aeration is constrained, directly or indirectly, to the frame 300 advancing at speed vt and also:

- - comprises at least one pin 202 to which a generic bearing 101, 130, 131 of a generic aerator tool 1, 110 is idle coupled,
- - cyclically moves said at least one pin 202 along a predefined path 201, 211, at a speed proportional to the speed vt of the frame 300 to which it is constrained;
- Where such movement of this at least one pin 202 brings it consecutively:

  A. to a first position 202' in which the generic aerator tool 1, 110 can be arranged vertically, subjected only to gravity, with the tip V grazing the soil surface,
  B. to a sequence of second positions 202" in which the generic aerator tool 1, 110 is embedded in the soil up to the maximum intended depth, after having formed a fulcrum F therein,
  C. and then to a third position 202''' in which it is once again extracted from the soil.

With this definition, the fulcrum F formed at the moment the tines 102 penetrate the soil becomes a component and a constraint of the kinematic mechanism, substantially forming a rotation axis for the tines 102 fixed on the soil surface. As a result of the combined motion of the pin 202 with respect to the frame 300 and of the frame 300 with respect to the soil, the translation of the tines 102 and their rotation about the fulcrum F cause them to sweep an area of soil, creating the fan 304 of angular width $\alpha$, axis $\beta$, angle $\Upsilon$ between the nearest fan edge and the vertical, and a depth equal to $hR \cos(\Upsilon)$.

Ultimately, the kinematic mechanism according to the invention spontaneously transitions from having two degrees of freedom-when the aerator tools 1, 110 or similar are not operational, i.e., not embedded in the soil-to one degree of freedom when they are operational, i.e., embedded in the soil. This state transition depends only on the instantaneous position of the pin 202: whether it is inside (202") or outside the positions 202'-202'''.

  A. When the pin 202 is outside the zone 202'-202''', its vertical distance from the ground is greater than the length from the bearing 101 of the rod 104 to the tip V. The aerator tool 1, 110 does not reach the soil with the tip V; it thus does not form the fulcrum F and is free to rotate around the pin 202, which in turn has freedom of movement. As a result, the kinematic mechanism now has two degrees of freedom.
  B. When the pin 202 is in a position 202" inside the zone 202'-202''', the vertical distance of the pin 202 from the ground is less than the previously mentioned length from bearing 101 to tip V of the aerator tool 1, 110; the tip V reaches the ground as soon as it reaches point 202' and forms the fulcrum F, which acts as a "hinged wheel" type constraint; in this situation, only the movement of the pin 202 is permitted.

As a result, the kinematic mechanism now has only one degree of freedom. The positioning of the aerator tool 1, 110 with the tip V pointing downward in a ready-to-operate position, thanks to the idle coupling 101, 202, is spontaneous, due only to gravity; it is not retained, guided, or limited by any other means, as is instead required in the prior art (see at least D1-US 5207378, D2-US 4819734, D3-US 9357687B2, D4-US 3802513, D5-WO 02/094000A1, D6-US 2068328, D7-US 1091031), which requires limits on the maximum inclination of the aerator tools.

The spontaneous, unguided transition from two to one degree of freedom as soon as the aerator tool 1, 110 is in a position to operate (tip V grazing the ground), and vice versa back to two degrees of freedom as soon as the tip V exits the ground, enables aerator machines to be constructed simply and with many possible variants, the preferred of which will be described shortly.

According to the invention, the depth of penetration of the tip V into the soil, the width $\alpha$ of the fan, and its orientation forward or backward relative to the direction of advancement depend on parameters that are also adjustable during operation. It is necessary to explain some graphic symbols and data presentations used in the following figures to schematically show aerator machines 310 according to different variants 320, 330, 340, 350, 360. For each variant, the dimensions that characterize the kinematic element are given as a function of their ratio to the tine length hR. The length hR, in fact, is considered the reference measurement.

The advancement speed vt is not directly quantified because it has no kinematic meaning by itself, just as the cycle execution time does not by itself.

What does affect the formation of the fans is instead the frame 300 displacement step during the execution of a full cycle, which is equal to the product of these two quantities; that is:

$$step = \text{vt} \times \text{cycle duration}$$

A cycle is completed when the kinematic mechanism 200 returns to the start-of-cycle state. For simplicity, a cycle is considered to start from the creation of a first fulcrum $F_1$ up to the next fulcrum $F_2$ executed by the same aerator tool 1, 110. For some variants that differ from the above definition, a different definition of cycle will be specified. In the figures, the step displacement is also quantified in relation to hR.

During a cycle, multiple fulcrums $F_1$, $F_2$, $F_3$, etc. (preferably equidistant with spacing $\Delta F$) may be created if the kinematic mechanism 200 successively drives into the ground a corresponding number of aerator tools 1, 110. The distance $\Delta F$ is also quantified as a function of hR.

The position and width $\alpha$ of the fan 304 created around each fulcrum F are also indicated.

The ground is almost always symbolized by a graduated line; the graduation serves only to help more easily appreciate the forward movement of the aerator machine. The method of soil aeration according to the invention, which provides for bringing the aerator tools 1, 110 into vertical position by gravity alone to touch the ground with their tip V and then embed them into the soil forming a fulcrum F at which the tines 103 can slide and rotate-a constraint F, in other words, that becomes part of the kinematic mechanism-is achievable with many very different mechanical assemblies that produce similar results in terms of fan 304 formation.

The invention has at least the following advantages:

- first, the kinematic mechanism 200 only needs to allow the aerator tool 1, 110 to penetrate the soil in vertical orientation, while its rotation therein occurs completely naturally;
- second, the kinematic mechanism 200 is yielding in the presence of obstacles such as large roots, whose damage is unlikely.

Below, some of the preferred variants are shown.

A first family of variants is that of crank-type aerator machines 320 equipped with a kinematic mechanism 200 having a cyclic orbit 201 (in the case at hand, for example, a circular orbit) where the aerator tools 1 are operated by one or more cranks 204. The kinematic mechanism 200 has a cycle that lasts for one 360° rotation of one of the one or more present cranks 204.

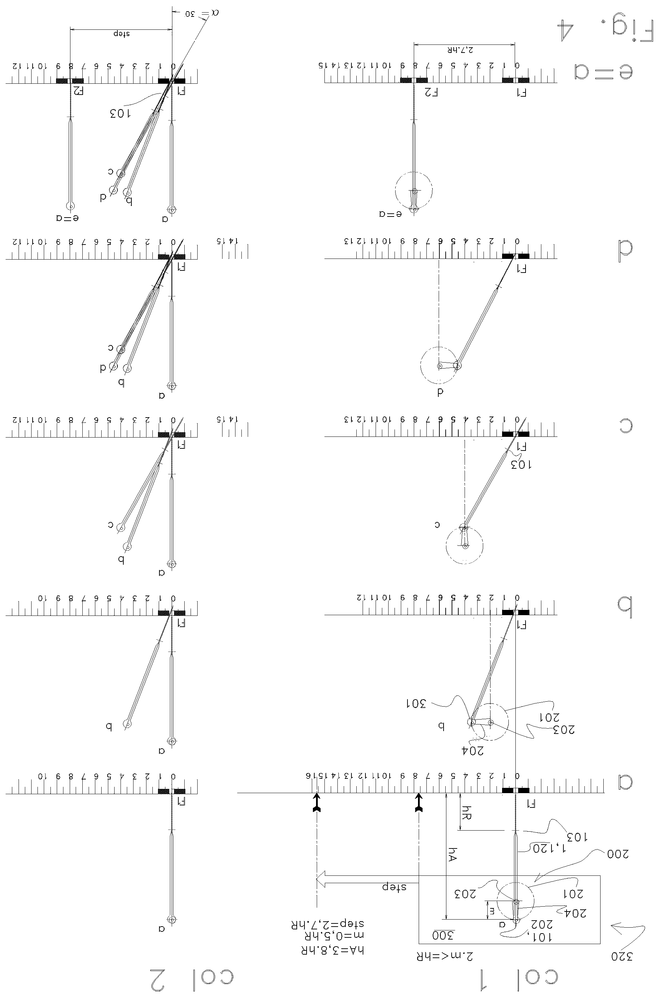

Figure 4a shows a crank-type aerator machine 320 with a single crank 204 characterized, by way of non-limiting example, by the following values:

$$hA = 3.8 \times hR$$

$$m = 0.5 \times Hr$$

$$step = 2.7 \times hR$$

With these parameters, fans are obtained with an angular width $\alpha = 30°$, positioned in a clockwise direction from the vertical to the left.

This is clearly shown in Figs. 4a to 4e where, in column 1, the status and progressive advancement of the crank-type aerator machine 320 are represented every 90° of rotation of the crank 204, while in column 2 the progressive position of the single aerator tool 1 is highlighted, superimposed with those of the previous states to show a kind of animation of the aerator tool 1 around the single fulcrum F created in each cycle.

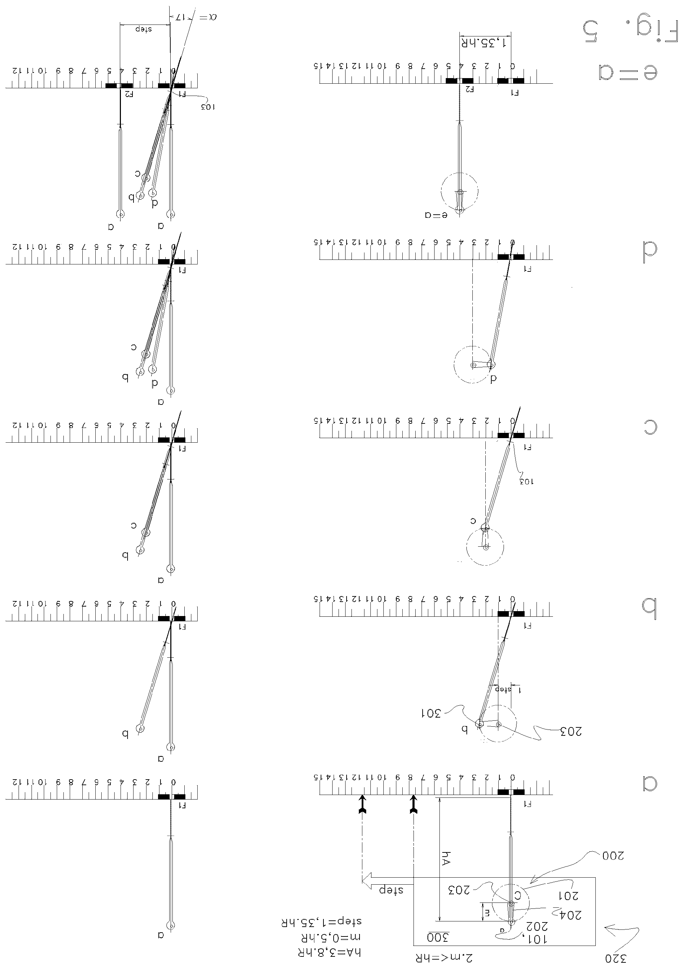

Figures 5a to 5e show the same crank-type aerator machine 320 as in Figs. 4a to 4e, except that the advancement speed vt is halved compared to the previous figure, so the displacement step is halved to $1.35 \times hR$ and the fans become narrower, with an angular width $\alpha = 17°$, still positioned in a clockwise direction from the vertical to the left, but deeper.

As already mentioned above, the angular width $\alpha$ of the fan can be increased, all other conditions being equal, by reducing the height hA.

This comparison between Figs. 4 and 5 highlights the fact that the angular width $\alpha$ of the fan and the displacement step can be modified, even in the field and after evaluating the type of work required by the soil, before starting the operation, using a threaded adjustable aerator tool 120 to modify the height hA (and consequently, also the height of the rotation center C of the crank 204 by raising or lowering the frame 300) and modifying the speed ratio between the advancement speed vt and the angular speed $\omega$ of the crank rotation.

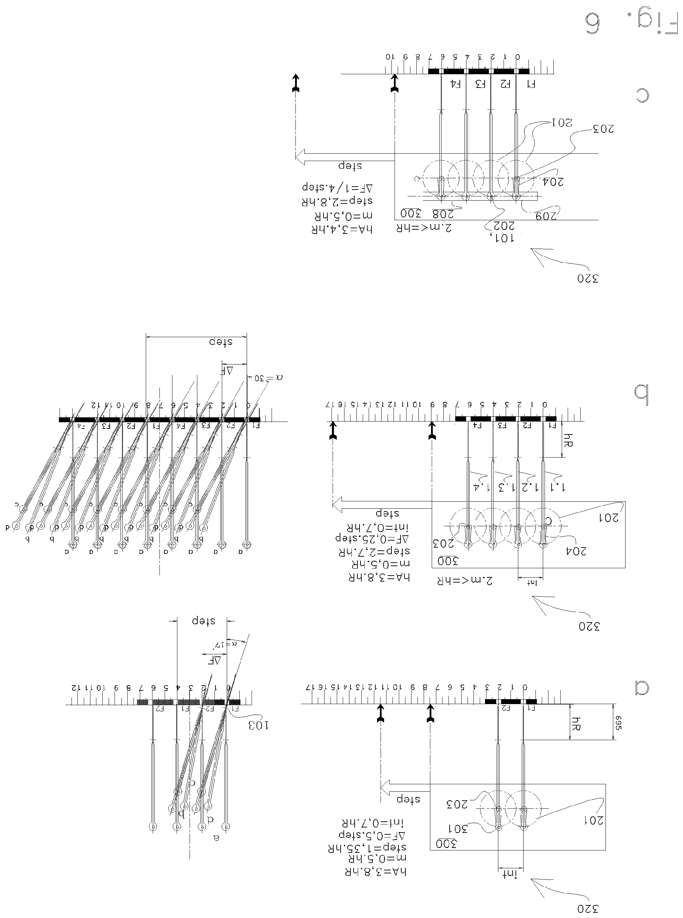

Figures 6a and 6b show crank-type aerator machines 320 equipped respectively with 2 and 4 cranks 204, each operated by its own drive shaft 203. To obtain fans of the same shape and equidistant, all cranks 204 and aerator tools 1 have the same kinematic dimensions among themselves. The drive shafts 203 are equidistant from each other and at the same height from the ground. The cranks 204 all have the same angular position at every moment, which implies, in particular, that they all rotate at the same angular speed $\omega$. As a mere example, for ease of comparison with the results obtained with the crank-type aerator machines 320 of the previous

Figs. 4 and 5, the cranks 204 and aerator tools 1 of Figs. 6a and 6b are shown with identical dimensions to those in Figs. 5a to 5e.

In Fig. 6a, the advancement has a step value and a fan width as in Fig. 5, but the double crank 204 doubles the density of fulcrums $F_1$ and $F_2$ produced by these cranks.

In Fig. 6b, the advancement has a step value and a fan width as in Fig. 4, but the quadruple crank 204 quadruples the density of fulcrums $F_1$, $F_2$, $F_3$, and $F_4$ produced by these cranks.

In principle, a crank-type aerator 320 as defined so far can include a number of cranks 204 limited only by structural constraints.

With reference to Figs. 6a and 6b, having established the possible distance $\Delta F$ between two successive fulcrums F and the possible number M of cranks 204, it will be set that step = $M \times \Delta F$.

It is therefore evident the advantage of such variants of crank-type aerator machines 320 compared to the base version shown in Figs. 4 and 5 for two different speeds vt.

Figure 6c shows how, at least for the variant in Fig. 6b, it may be convenient-rather than providing 4 cranks 204, each driven by a separate drive shaft 203-to achieve the same movement of the four aerator tools 1 by connecting and coupling them via hinges 101, 202 to a rocker 208, which is in turn coupled by two hinges 209 to just two cranks 204 with the same arm length m, both loosely connected to the frame 300 at the same height from the ground. One of the cranks is driven by a drive shaft 203, while the other is simply dragged.

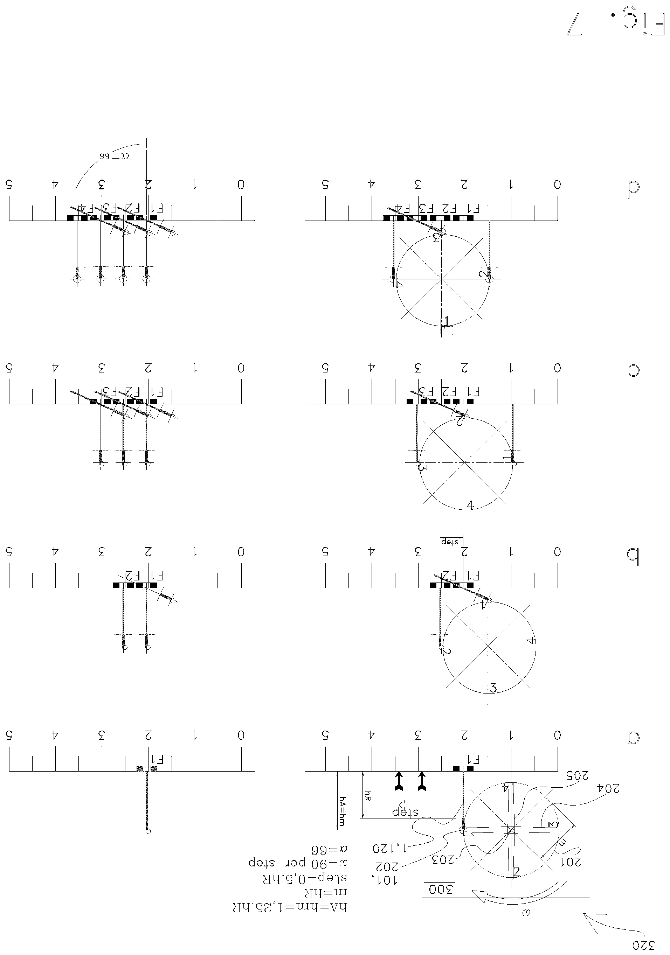

Figures 7a to 7g show a further version of the crank-type aerator machine variant 320. The kinematic mechanism includes at least two aerator tools 1 with the same kinematic dimensions, each hinged via hinges 101, 202 to the ends of respective cranks 204 of equal arm length m and arranged radially equidistant to form a star 205 of cranks 204 keyed onto a drive shaft 203 idle coupled with the frame 300.

In the illustrated example, the cranks 204 are four, arranged 90° apart. At the ends of the cranks 204, aerator tools 1 are hinged via the hinges 101, 202.

The geometric and dynamic characteristics in the figure are, for example:

height of the shaft 203 from the ground: $h_m = hA$

$$hA = h_m = 1.25 \times hR$$

$$m = hR$$

The kinematic mechanism cycle is completed at each 90° rotation of the cranks 204, during which the aerator machine 320 advances by:

$$step = 0.5 \times hR$$

The rotation speed is $\omega = 90°$ per step and the fan opening angle $\alpha$ produced is 66°, clockwise from the vertical. Smaller openings, still clockwise from the vertical, can be obtained at least by increasing the values of hA and $h_m$.

This version of the crank-type aerator machine 320 has the advantage of being very low in height and mechanically very simple.

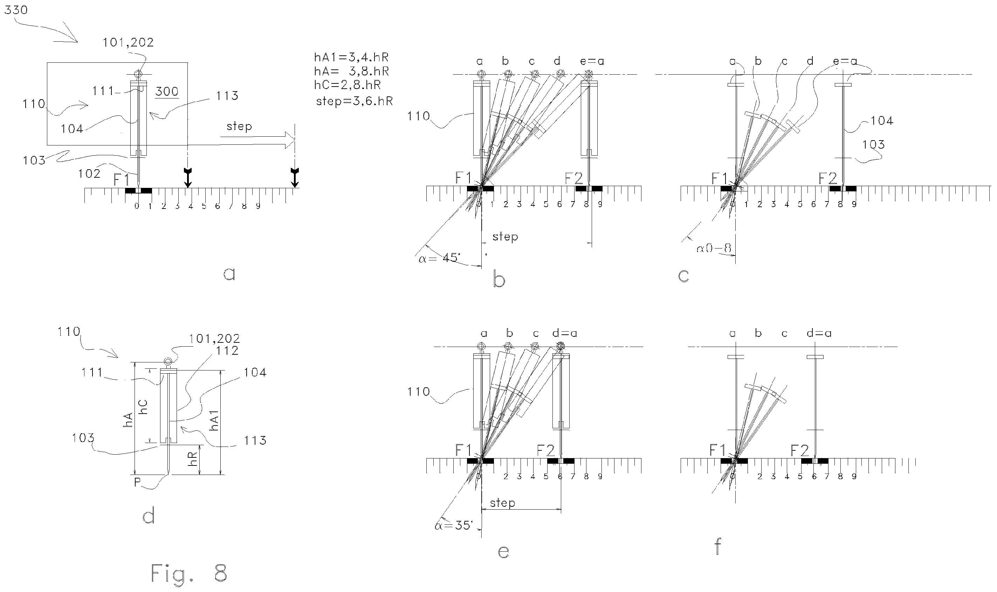

Figures 8a to 8g show a second base variant of the aerator machine, consisting of a jack-type aerator machine 330.

It includes at least one jack-type aerator tool 110 idle coupled via a bearing 101 or 130 to a pin 202, which is in turn fixed to the frame 300. The kinematic mechanism lies in the jack-type aerator tool 110 and includes a piston 111 made to move up and down by hydraulic fluid inside a cylinder 112, while the frame 300 drags the jack-type aerator tool 110.

Assume the start of a cycle when the jack-type aerator tool 110 is in a vertical position with the piston head 111 retracted enough so that the tip V grazes the ground. The hydraulic pressure drives the tip V into the ground, creating a fulcrum F while the frame 300 moves forward, tilting the jack-type aerator tool 110. As soon as an inclination sensor (not shown) detects that the jack-type aerator tool 110 has reached a predetermined inclination (45° in Fig. 8b, 35° in Fig. 8e), it retracts the piston 111 upward, returning the jack-type aerator tool 110 to the vertical; the inclination sensor detects this position and commands the extension of piston 111 to begin a new cycle.

Preferably, the maximum extension and retraction of the piston can be preset so that the jack-type aerator tool 110 can be adapted for various types of aeration.

This jack-type aerator machine 330 variant is very useful because it allows the angular width $\alpha$ of the fan 304 to be precisely determined without graphic studies, and even to define its shape, if desired, by modulating-during the penetration of the tip V into the soil-the volume of hydraulic fluid introduced into the cylinder 112 as a function of the inclination detected during advancement; moreover, for the same height hA, the frame 300 is allowed a lower vertical dimension than all other proposed variants. However, this first version of the variant has the drawback of generating successive fulcrums F that may be too far apart.

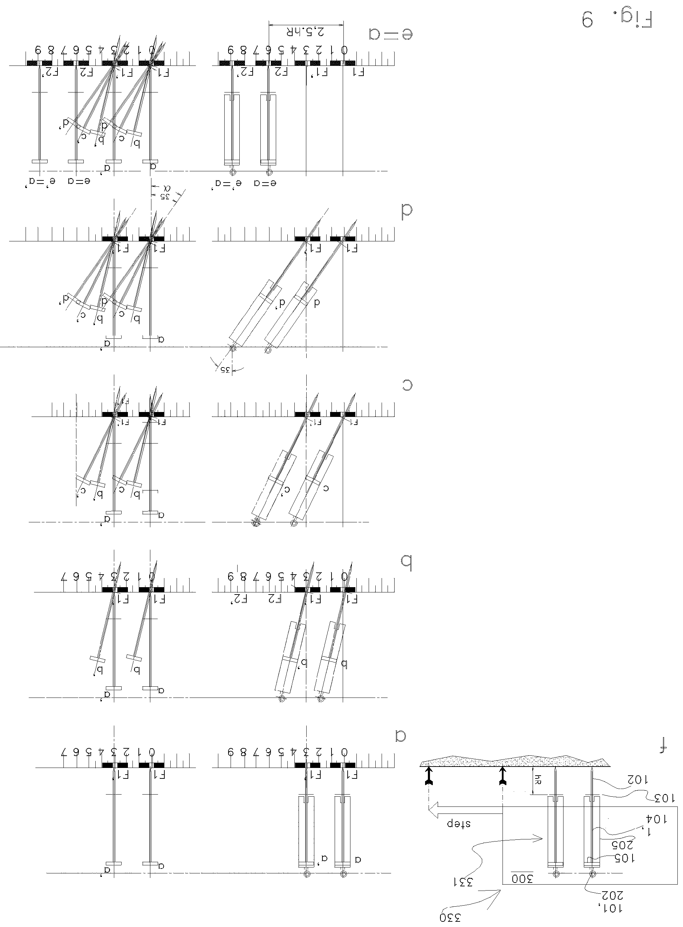

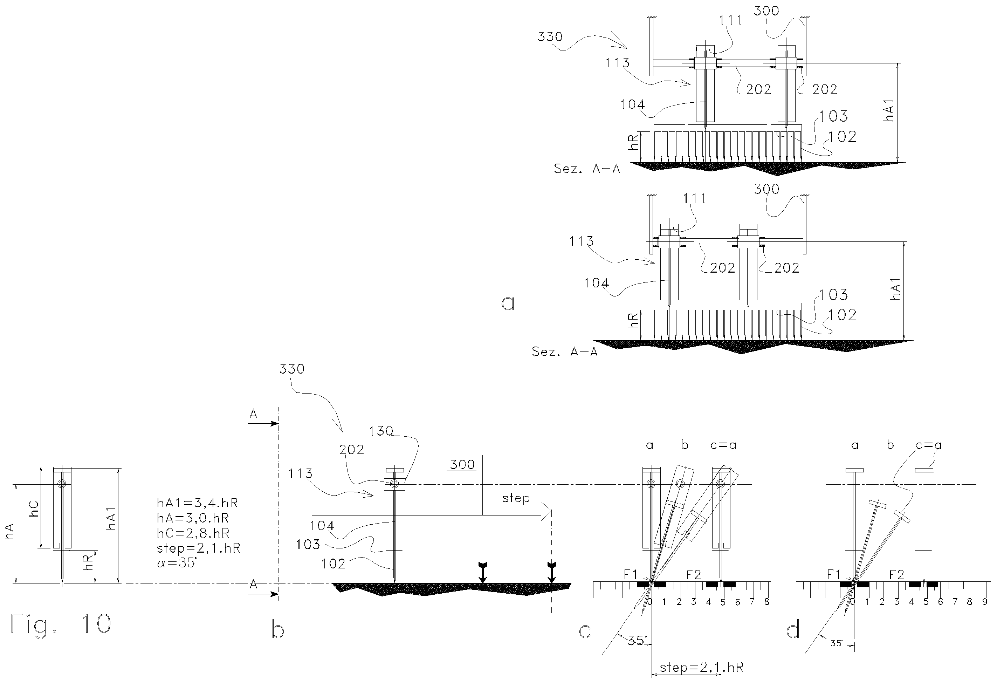

Figure 9 shows how to eliminate this drawback by mounting multiple jack-type aerator tools 110 in sequence, preferably all with the same kinematic dimensions and at the same height from the ground as shown in Fig. 6 for the crank-type aerator machine 320. The multiple jack-type aerator tools 110 can be mounted much more closely than shown in Fig. 9 because the axes of their cylinders 112-even if bulky-can be alternately arranged on two or more vertical planes parallel to the plane of the drawing and sufficiently spaced so as not to interfere with one another (not shown in the figures but deducible from Figs. 1e and 10a).

Figure 10 shows a jack-type aerator tool 110 equipped with a sliding collar bearing 130 that allows adjustment of the height hA. Compared to Fig. 8d, it can be seen that the advancement step can be reduced, even in the field, with the same angular width $\alpha$ (in this case 35°), by reducing the height hA (in this case from hA = 3.8 × hR to hA = 3.0 × hR).

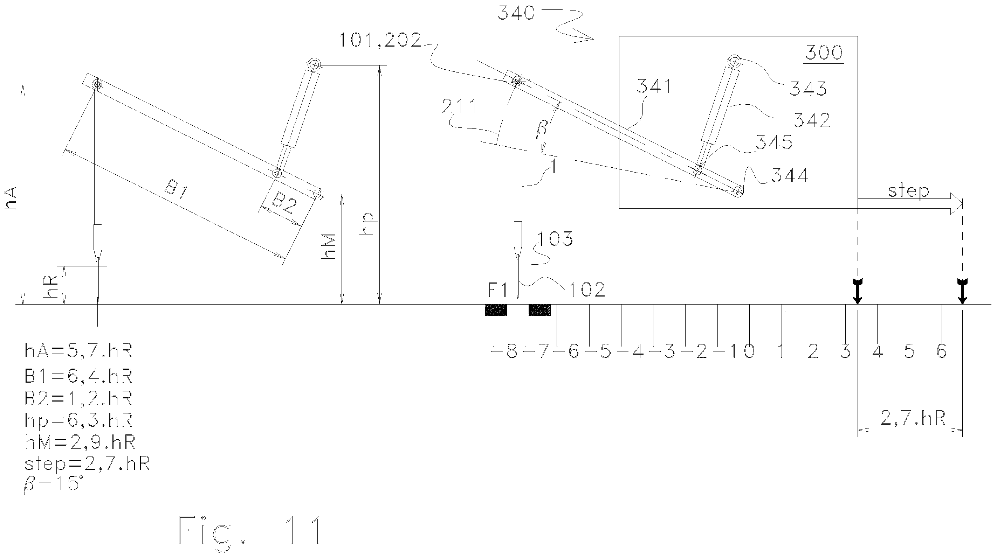

Figure 11 shows another base variant of the aerator machine 310 consisting of a rocker-type aerator machine 340, which comprises:

- - a rocker 341 that has at one end a idle coupling 344 with the frame 300 and at the other end an idle coupling 101, 202 with an aerator tool 1;
- - a jack 342 that has two idle couplings: a first 343 with the frame 300 and a second 345 with the rocker 341, and which is capable of oscillating the rocker 341.

The axle spacing between idle coupling 101, 202 and idle coupling 344 is denoted B1; the axle spacing between idle coupling 345 and idle coupling 344 is denoted B2, not necessarily smaller than B1, as shown in the figure.

The oscillation occurs around the idle coupling 101, 202 and is of an angle $\beta$ determined by a volumetric pump (not shown) which injects/extracts adjustable and measurable quantities of fluid from the jack 342 in a known manner, e.g., with a direct measurement of the angle $\beta$. As a result, idle coupling 345 oscillates between two positions at the ends of an arc of circle 201, raising and lowering the aerator tool 1.

The oscillation can also be produced by equivalent means, such as a crank that moves a connecting rod hinged to the rocker 341 at point 345. The oscillation frequency is proportional to the forward speed vt, preferably in an adjustable manner.

In the example shown, the rocker-type aerator machine 340 of Fig. 11 has the following dimensional ratios: hA = 5.7 × hR; B1 = 6.4 × hR; B2 = 1.2 × hR; hp = 6.3 × hR; hM = 2.9 × hR; step = 2.7 × hR; $\beta$ = 15°.

A cycle ends when the aerator tool 1 returns to its initial position.

The duration of the cycle is proportional to the forward speed vt, preferably in an adjustable ratio.

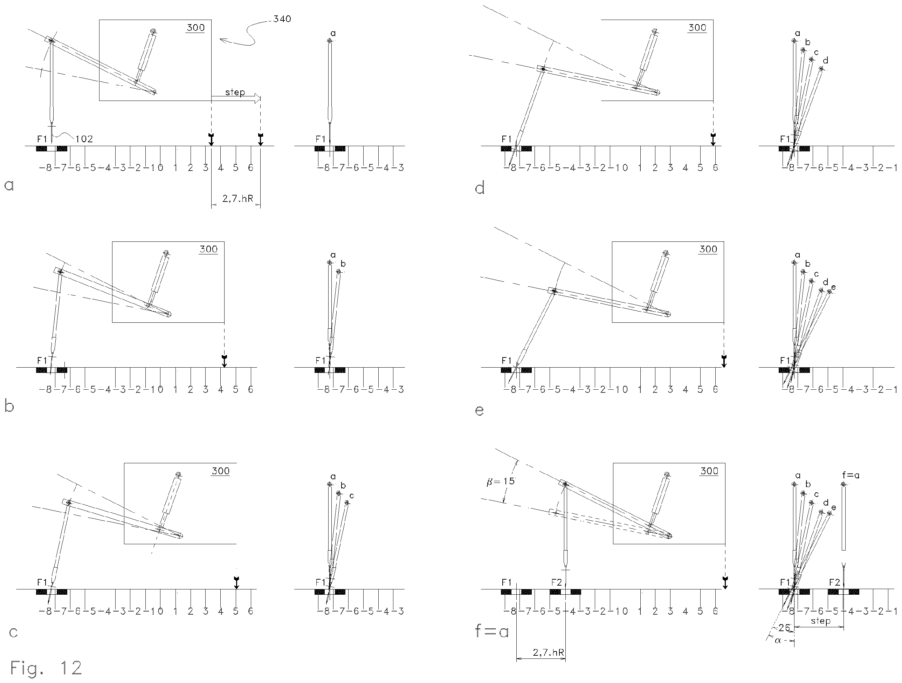

Figure 12 shows, at equal time intervals, the status of the kinematic mechanism of the rocker-type aerator machine 340 of Fig. 11 in five successive phases. In this case, the advancement step, equal to the distance between two successive fulcrums F, is 2.7 × hR and the fan width $\alpha$ is 26°.

Preferably, at least the lengths B1 and B2 can be easily varied and adjusted even in the field, using sliding hinges for the idle couplings 344 rocker-frame and/or 345 rocker-jack, and/or 101, 202 rocker-aerator tool, wherein the sliding hinges can be fixed at various points on the frame 300 and/or rocker 341.

The rocker-type aerator machine 340 has the drawback that it cannot employ multiple aerator tools 1 operating identically, but only one; on the other hand, it offers the advantage of giving the technician ample freedom to act on many of the kinematic mechanism's dimensions both at design stage and in the field. In any case, the distance between two successive fulcrums F is reduced-as already seen for other variants of the aerator machine-by increasing the cycle speed relative to vt, while the angular width $\alpha$ of the fan 304 increases by reducing the height hA relative to hR.

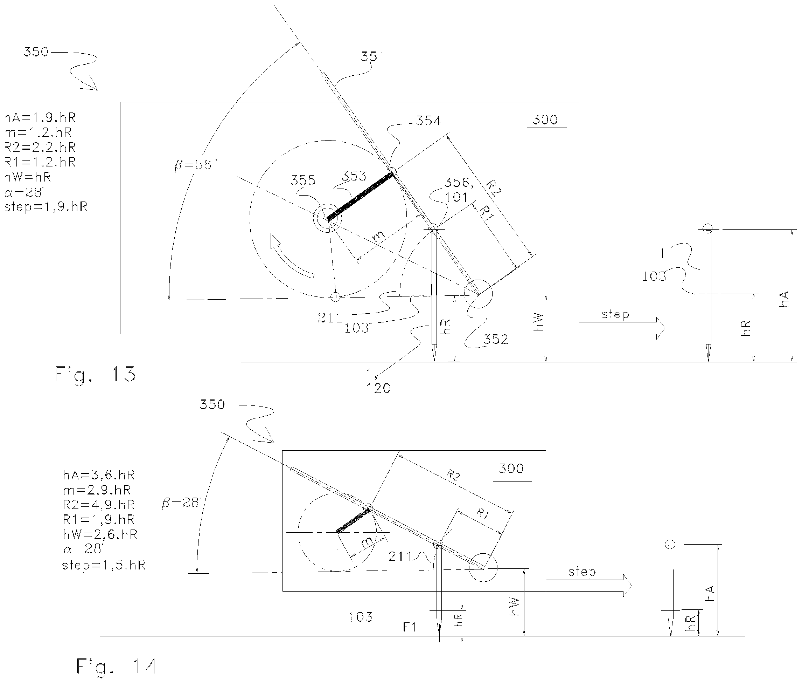

Figures 13 and 14 show a further variant of the aerator machine consisting of a glyph-type aerator machine 350.

The kinematic mechanism consists of:

- - a glyph 351 connected to the frame 300 via a hinge 352 and equipped with a further hinge 356 that connects to the bearing 101 of an aerator tool 1;
- - a crank 353 coupled at one end to the frame 300 via a drive shaft 355 and at the other end to the glyph 351 via a sliding carriage 354.

The rotation of the crank 353 cyclically moves the hinge 356 along an arc-shaped trajectory 201.

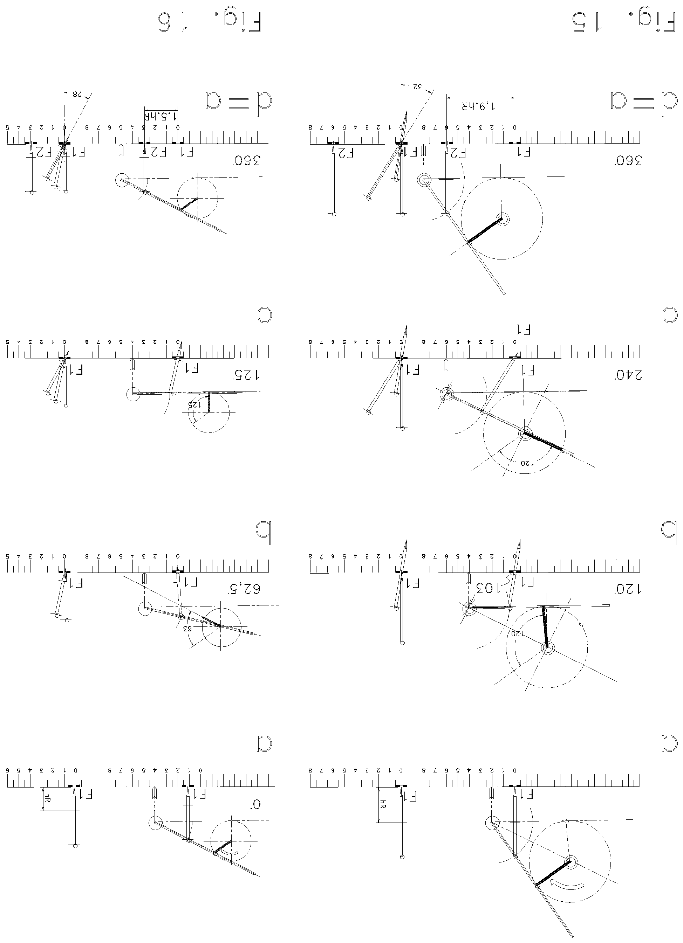

Figures 15a to 15d and 16a to 16d respectively show the displacements of the aerator machines 350 from Figs. 13 and 14.

The aerator machine 350 of Fig. 13 produces a fan with angular width $\alpha$ = 32° and step = 1.9 × hR;

The aerator machine 350 of Fig. 14 produces a fan with angular width $\alpha$ = 28° and step = 1.5 × hR.

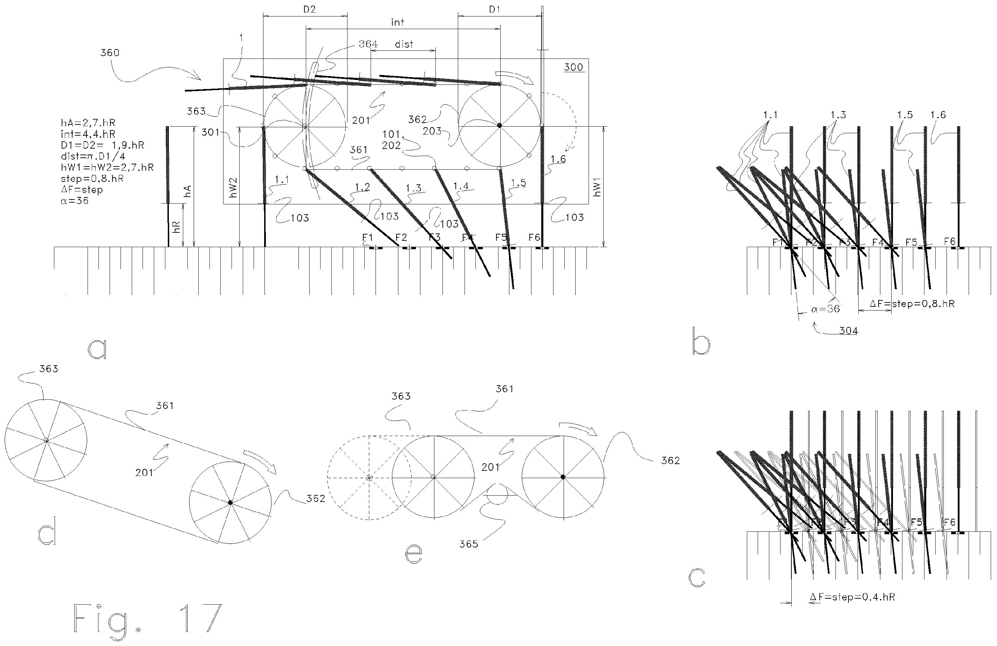

Figures 17a to 17e show a further variant of the aerator machine consisting of a track-type aerator machine 360, whose kinematic mechanism includes:

- - a driving wheel 362 of diameter D1 rotated via coupling to a drive shaft 203 idle coupled with the frame 300. The height of the drive shaft 203 from the ground is hW1; its rotation is clockwise;
- - a driven wheel 363 loosely mounted to the frame 300 via an idle coupling 301;
- - a track 361 driven by the driving wheel 362 and in turn driving the driven wheel 363;
- - a series of hinges 101,202 mounted on the track 361 at constant distances dist;
- - a series of aerator tools 1 (some labeled 1.1, 1.2, ... 1.6) hinged to the hinges 101,202.

In a first version, diameter D2 and height from the ground hW2 are identical to those of the first wheel 362; the axle spacing between the axes of the two wheels is denoted int.

A full cycle of the kinematic mechanism is considered completed when a generic aerator tool $1_n$ has reached the configuration of the preceding aerator tool $1_n$-1. In the example shown, this is achieved after a 90° rotation of the wheel 362.

The advancement step is the distance travelled by the frame during one cycle.

Figure 17a shows the aerator machine 360 in a state where aerator tool 1.6 is almost perpendicular to the ground about to form a fulcrum $F_6$. The previous tools 1.5, 1.4, 1.3 are forming each their own fans 304 while rotating around respective fulcrums $F_5$, $F_4$, $F_3$ formed in earlier cycles; tool 1.2 is shown after having just disengaged from fulcrum $F_2$ and is dragging on the ground; tool 1.1 has already been lifted off the ground by the track 361. The image therefore shows various aerator tools 1 in different positions with respect to their fulcrums F, but also represents the various positions that a single aerator tool 1 takes with respect to its own fulcrum F at constant time intervals. These positions are shown in Fig. 17b where multiple superimposed images of the same aerator tool illustrate the fans 304 in formation under their respective fulcrums $F_1$, $F_2$, etc.

The kinematic mechanism dimensions shown are:

- hA = 27 hR
- int = 4,4 hR
- D1 = D2 = 1,9 hR
- dist = $\pi$ D1/4
- hW1 = hW2 = 2,7 hR
- *step* = 0,8 hR

step $\Delta$F between fulcrums F = step
fan opening $\alpha$ = 36°

The spacing $\Delta$F between fulcrums F can be easily varied by adjusting the interval dist between aerator tools 1 without modifying the fan 304. In Fig. 17c, the interval dist is halved, and so is the spacing $\Delta$F, without modifying the fan 304 shape or width $\alpha$.

The time the aerator tool 1 remains in the soil-and thus the reduction of fan width $\alpha$-can be shortened by raising the track by an adjustable amount after disengaging from the front wheel (the driving wheel 362, in this case).

This can be achieved, for example:

a) by increasing the height hW2 from the ground of the idle coupling 301 relative to hW1, providing on the frame 300 a guide 364 for sliding in the upward and downward direction of the idle coupling 301 of the driven wheel 363 (see Figs. 17a and 17d);

b) and/or reducing the axle spacing int between the wheels 362, which is possible using an auxiliary roller 365 to keep the track taut via known methods (see Fig. 17e), and providing a lateral sliding guide for the idle coupling 301 of the driven wheel 363 (not shown);

c) optionally and additionally, by also reducing the diameter D2 relative to D1. Options a) and b) have the advantage of being applicable in the field.

From a kinematic point of view, the aerator machine 360 can be considered an evolution of the crank-type aerator machine 320 because during the insertion phase of an aerator tool 1 into the soil, the kinematic mechanism behaves in the same way. However, it differs greatly in the number of usable aerator tools, the achievable density of fulcrums F with the same fan 304 shape, and the possibility of obtaining different fan shapes.

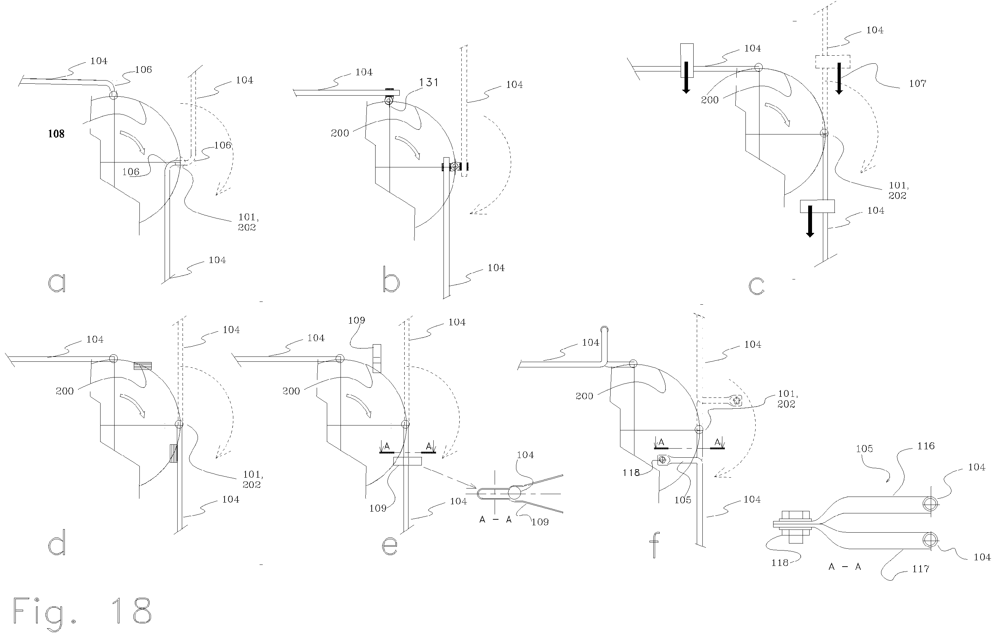

Figures 18a to 18f show detail arrangements that may be useful to adopt.

When an aerating tool is about to rotate freely into the downward direction, it may happen that-due to friction in the hinge 101, 202 (possibly caused by accumulated dirt)-it does not immediately fall into the vertical position as expected, but only when the kinematic mechanism imposes a sufficient inclination to overcome the resistance to rotation. In this case, it is preferable that, when the aerating tool reaches a vertical position with the tip V facing upward and about to rotate downward, the vertical projection of its center of gravity does not fall on the axis of the hinge 101, 202, but falls external to the axis with a sufficient offset to generate a moment that overcomes the hinge resistance to rotate downward. As a non-limiting example, three alternatives are proposed to prevent this inconvenience.

Figures 18a and 18b show an offset of the centre of gravity of the aerating tool relative to the vertical passing through the hinge 101, 202, using a bend 106 or the already mentioned sliding collar bearing 131.

Figure 18c offsets only the centre of gravity by applying an eccentric weight 107 to the aerating tool. This solution does not significantly alter the shape of the fan 304.

Offsetting the centre of gravity slightly modifies the shape of the fan 304.

On the other hand, when the aerating tool 1 rotates freely, it may begin to oscillate instead of immediately pointing towards the ground; this can significantly hinder the formation of the fan 304 as is desired.

A possible solution to this problem is shown in Figure 18d: without restricting the free rotation of the aerating tool towards a vertical position, a bumper stop 108 is provided, the stop consists in a rigid bumper preferably made of rubber or equivalent, fixed to the kinematic mechanism 200 in appropriate positions corresponding to each aerating tool 1.

An alternative to the bumper stop 108 is shown in Figure 18e, where the elimination of possible oscillations is obtained with a braking device of the aerating tool 1 consisting of a flexible clip 109 between whose splayed jaws the aerating 1 tool falls and is restrained. The restraint is mild-only sufficient to prevent bouncing of the aerating tool 1 and must release as soon as the tip V forms a fulcrum F.

All agricultural equipment that deals with soil working is subject to breakage if it encounters obstacles that offer strong resistance, such as stones or other buried solid elements. In most of these machines, therefore, the parts directly in contact with the soil are connected to the rest of the machinery through yielding connections under predefined limit stresses, so that-by breaking, bending, or disengaging-they prevent the transmission of damaging stresses to the remaining machinery.

Fig. 18f illustrates one possible solution to this problem for a generic aerating machine 310 according to the invention.

As close as possible to the hinge 101, 202, the rod 104 of each aerating tool 1 is interrupted, and the two ends 116 and 117 are bent to form, each, a loop 105.

The two ends 116 and 117 are flattened and connected to each other by a bolt 118 tightened using a torque wrench. The tightening torque is designed to be overcome by a torque generated by a resisting force greater than the force exerted by the aerating tool 1 during normal operation, but lower than the maximum value bearable by the kinematic mechanism without damage.

In the case of jack-type aerating tools 110, the predetermined maximum force transmittable by the aerating tools 110 to the remaining parts of the kinematic mechanism is more easily implemented through a pressure relief valve of the jack, which opens above a corresponding predetermined pressure (not shown in the figures).

It has been said so far that the kinematic mechanism 200 cyclically brings the aerating tool 1 or 110, by the sole effect of gravity, into a vertical position, that is to say with the rod 104 and tines 102 vertical, and with the tip V close to the ground. The vertical arrangement is actually possible, strictly speaking, only if the axis of the rotation bearing 101, 202, the rod 104 and the tines 102 lie on the same plane, and the centre of gravity of the aerating tool 1 or 110 falls on the axis connecting the tip V to the axis of the rotation bearing 101.

It is seen, at least in figs. 18a, b, c, f, that such condition is not fulfilled because the centre of gravity, in these figures, is not aligned with the rod, and therefore, in general, the arrangement that the aerating tool 1 or 110 assumes when subjected to the sole force of gravity is only close to vertical. On the other hand, to achieve the purposes of the invention, it is not necessary for the aerating tool 1 or 110 to be vertical but only that, by the sole effect of gravity, it assumes an inclined arrangement with sufficient inclination to bring the tip V to graze the ground and then to embed into it. An inclination different from the vertical may on the contrary be preferred and can easily be predetermined using, for example, an eccentric sliding collar bearing 131 with suitable eccentricity or other means to shift the position of the centre of gravity in the transverse direction with respect to the axis connecting the tip V to said axis of the rotation bearing 101, 202.

**Claims**

1. Aerating machine (310; 320, 330, 340, 350, 360) for the aeration of soils, comprising a frame (300) that can move over the ground at speed vt and configured to drive a kinematic mechanism (200):

   **characterized in that** the kinematic mechanism (200):

   - comprises at least one pin (202) having a horizontal axis and orthogonal to the direction of movement of the frame (300), to which is idle coupled a corresponding bearing (101; 130; 131) of a corresponding aerating tool (1; 110),
   - is configured to move said at least one pin (202) along a predefined path, with speed proportional to the speed vt of the frame (300) to which the kinematic mechanism (200) is constrained,

   bringing consecutively said at least one pin (202):

   - from a first position (202') in which the at least one aerating tool (1, 110) may assume, under the sole effect of gravity, a vertical or near-vertical or inclined position with the tip (V) grazing the surface of the ground,
   - to a generic second position (202") in which the at least one aerating tool (1, 110) is embedded in the ground substantially up to the corresponding hilt (103) after having created a fulcrum (F) therein,
   - and then to a third position (202‴) in which it is again extracted from the ground;

   wherein the one or more provided aerating tools (1; 110):

   - provide tines (102) parallel to a rod (104) coplanar therewith and connecting and constraining them to the bearing (101, 130, 131) intended in turn to be coupled to the corresponding pin (202),
   - all have the same length hR of the tines (102) from their tip (V) to their hilt (103),
   - all have the same length hA from their tip (V) to the axis of the bearing (101, 130, 131),

   said kinematic mechanism (200) passing spontaneously from having two degrees of freedom, when said one or more aerating tools (1, 110) are not operative, i.e., not embedded in the soil, to one degree of freedom when said one or more aerating tools (1, 110) are operative, i.e., embedded in the soil,
   said state transition depending only on the position at a given instant of said pin (202) with respect to said first (202'), second (202"), and third (203') position.

2. Aerating machine (310; 320, 330, 340, 350, 360) according to claim 1, **characterized in that** said at least one pin (202) is moved by the kinematic mechanism (200) along a closed orbit with respect to said frame (300).

3. Aerating machine (310; 320, 330, 340, 350, 360) according to claim 1, **characterized in that** said at least one pin (202) is moved by the kinematic mechanism (200) along an alternating cyclic path (211) with respect to the frame (300).

4. Aerating machine (310; 320, 330, 340, 350, 360) according to claim 1, **characterized in that** said at least one pin (202) is directly constrained to the frame (300).

5. Aerating machine (310; 320, 330, 340, 350, 360) according to any of the preceding claims, except claim 4, **characterized in that** the proportionality ratio between the movement speed of said at least one pin (202) and the speed vt of the frame (300) is adjustable.

6. Aerating machine (310; 320, 330, 340, 350, 360) according to claim 2, **characterized in that** it consists of a crank-type aerating machine (320), wherein one or more aerating tools (1) having the same kinematic characteristics are each driven by a corresponding crank (204), all said cranks (204) being:

- - rotatably constrained to the frame (300),
- - all having the same arm length m,
- - mutually equidistant,
- - positioned at the same height from the ground,
- - all having the same angular position at the same instant,
- - and each keyed to a corresponding drive shaft (203).

7. Aerating machine (310; 320, 330, 340, 350, 360) according to claim 2, **characterized in that** it consists of a crank-type aerating machine (320) in which at least two aerating tools (1) having the same kinematic characteristics are constrained via hinges (101, 202) to a rocker (208), which is in turn coupled by two hinges (209) to two cranks (204) of equal arm length m, in turn idle coupled on the frame (300) at the same height from the ground, of which only one is driven by a drive shaft (203) while the other is merely dragged.

8. Aerating machine (310; 320, 330, 340, 350, 360) according to claim 2, **characterized in that** it consists of a crank-type aerating machine (320) in which at least two aerating tools (1) having the same kinematic characteristics are constrained via hinges (101, 202) to the ends of corresponding cranks (204) of equal arm length m, said cranks being radially equidistant from each other to form a spoke (205) of cranks (204) keyed to a drive shaft (203) idle coupled to the frame (300).

9. Aerating machine (310; 320, 330, 340, 350, 360) according to claim 4, **characterized in that** it consists of a jack-type aerating machine (330), which provides one or more jack-type aerating tools (110) with the same kinematic characteristics:

   - each idle coupled via a bearing (101; 130) to a pin (202) in turn constrained to the frame (300) at the same height from the ground,
   - where each jack-type aerating tool (110):

     - comprises a piston (111) and a cylinder (112),
     - the piston (111) is capable of moving up and down inside the cylinder (112) by the action of a hydrodynamic fluid while the frame (300) drags the jack-type aerating tool (110),
     - an inclination sensor associated with each jack-type aerating tool (110) is capable of commanding the retraction of the corresponding piston (111) inside the corresponding cylinder (112) until the withdrawal of the tip (V) from the ground when the corresponding jack-type aerating tool (110) has reached a predetermined inclination,
     - the same inclination sensor is capable of commanding the extension of the corresponding piston (111) to embed the tip (V) in the ground by a predetermined amount when the corresponding jack-type aerating tool (110) has reached the vertical position.

10. Aerating machine (310; 320, 330, 340, 350, 360) according to the preceding claim, **characterized in that** during the transition from the vertical position to the predetermined maximum inclination corresponding to the maximum extension of a piston (111), the flow rate of the hydrodynamic fluid introduced into the cylinder (112) is a function of the inclination measured at that moment by the inclination sensor.

11. Aerating machine (310; 320, 330, 340, 350, 360) according to claim 3, **characterized in that** it consists of a rocker-type aerating machine (340) comprising:

   - a rocker (341) having at one of its ends an idle coupling (346) with the frame (300), and at the other end an idle coupling (101, 202) with an aerating tool (1),
   - a jack (342) having a first idle coupling (343) with the frame (300) and a second idle coupling (345) with the rocker (341), and being capable of oscillating the rocker (341) through an angle β about the idle coupling (344),

   where the angle β is determined by a volumetric pump that injects/extracts adjustable and measurable amounts of fluid from the jack (342) in a known manner.

12. Aerating machine (310; 320, 330, 340, 350, 360) according to claim 3, **characterized in that** it consists of a glyph-type aerating machine (350) comprising:

   - a glyph (351) constrained to the frame (300) through a hinge (352) and provided with a further hinge (356) which connects the bearing (101) of an aerating tool (1),
- a crank (353) coupled at one end to the frame (300) via a drive shaft (355) and at the other end to the glyph (351) via a carriage constraint (354),
- where the rotation of the crank (353) cyclically moves the hinge (356) along a circular arc trajectory (201).

13. Aerating machine (310; 320, 330, 340, 350, 360) according to claim 2, **characterized in that** it consists of a track-type aerating machine (360) comprising:

- a driving wheel (362) of diameter D1 set in rotation via a coupling to a drive shaft (203) idle coupled to the frame (300), with height from the ground of the drive shaft (203) equal to hW1; its rotation being clockwise or counterclockwise if the speed vt is directed to the right or vice versa;
- a driven wheel (363) of diameter D2 idle coupled to the frame (300) via an idle coupling (301), with height from the ground of hW2;
- a track (361) driven by the driving wheel (362) and in turn driving the driven wheel (363);
- a series of hinges (101, 202) mounted on the track (361) at constant distances dist;
- a series of aerating tools (1.1, 1.2, ..., 1.6) constrained to the hinges (101, 202).

14. Aerating machine (310; 320, 330, 340, 350, 360) according to claim 13, **characterized in that** means are provided for modifying the height hW2 from the ground of the driven wheel (363) and the axle spacing int between the driving wheel (362) and the driven wheel (363).

15. Aerating machine (310; 320, 330, 340, 350, 360) according to one or more of the preceding claims, **characterized in that** the inclination that said generic aerating tool (1, 110) assumes, subject only to the force of gravity and with the tip (V) grazing the surface of the ground, is adjustable by shifting the position of the center of gravity in a direction transverse to the axis connecting the tip (V) to the axis of the rotation bearing (101, 202).

16. Aerating machine (310; 320, 330, 340, 350, 360) according to the preceding claim, **characterized in that** the transverse displacement of the center of gravity of the generic aerating tool (1, 110) is obtained by mounting an eccentric sliding collar bearing (131) with suitable eccentricity.

Fig. 1

Fig. 2

Fig. 3

$$Cx = Cx0 + vt.t$$
$$Px = Cx + m.cos(\omega.t)$$
$$Py = Cy + m.sen(\omega.t)$$
$$DeltaPx(t1,t2) = (Px2 - Px1) = m.[cos(\omega.t2) - cos(\omega.t1)]$$

Fig. 4

Fig. 5

Fig. 6

Fig. 7

a

b

c

d

0 1 2 3 4 5

F1

F1 F2

F1 F2 F3

F1 F2 F3 F4

α=66

hA=hm=1,25·hR
m=hR
step=0,5·hR
ω=90 per step
α=66

step
hR
hA=hm

300
320
101, 202
203
204
205
1,120
201

330

101,202

111 — 300

110

104 113

103

102

F1

step

a

hA1=3,4.hR
hA= 3,8.hR
hC=2,8.hR
step=3,6.hR

110

101,202
112

111

104

hA hC

103

hA1

113

hR

P

d

a b c d e=a

110

F1 F2

step

α=45'

b

a b c d e=a

104

103

F1 F2

α0-8

c

a b c d=a

110

F1 F2

step

α=35'

e

a b c d=a

F1 F2

f

Fig. 8

Fig. 9

Fig. 10

Fig. 11

hA=5,7.hR
B1=6,4.hR
B2=1,2.hR
hp=6,3.hR
hM=2,9.hR
step=2,7.hR
$\beta$=15°

EP 4 662 992 A1

Fig. 12

Fig. 13

hA=1.9.hR
m=1,2.hR
R2=2,2.hR
R1=1,2.hR
hW=hR
α=28°
step=1,9.hR

Fig. 14

hA=3,6.hR
m=2,9.hR
R2=4,9.hR
R1=1,9.hR
hW=2,6.hR
α=28°
step=1,5.hR

EP 4 662 992 A1

Fig. 16

Fig. 15

a=d

a=d

360°

360°

C

C

240°

125°

b

b

120°

62,5°

d

d

0°

Fig. 17

Fig. 18

EP 4 662 992 A1

Europäisches
Patentamt
European
Patent Office
Office européen
des brevets

# EUROPEAN SEARCH REPORT

**Application Number**

EP 25 18 2484

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/025891 A1 (GEORGOULIAS CHRIS M [US]) 31 January 2013 (2013-01-31) * paragraph [0013] - paragraph [0017] * * figures 1-3 * | 1-3,6 | INV. A01B45/02 |
| A | US 5 207 278 A (HATLEN RICHARD P [US]) 4 May 1993 (1993-05-04) * column 2, line 44 - column 3, line 62 * * figures 1,2 * | 1-16 | |
| A | US 4 819 734 A (CLASSEN ALVIN T [US]) 11 April 1989 (1989-04-11) * figures 1-4 * | 1-16 | |
| A | US 9 357 687 B2 (TEXTRON INC [US]; TEXTRON INC [US]) 7 June 2016 (2016-06-07) * figures 1-4B * | 1-16 | |
| A | US 3 802 513 A (PLOENGES I) 9 April 1974 (1974-04-09) * figures 1-4 * | 1-16 | |
| A | WO 02/094000 A1 (GREENCARE PTY LTD [AU]; LIVINGSTONE DAVID JOHN [AU]) 28 November 2002 (2002-11-28) * figures 1-5 * | 1-16 | TECHNICAL FIELDS SEARCHED (IPC) A01B |
| A | US 2 068 828 A (HAILES TUSTAIN EDWARD) 26 January 1937 (1937-01-26) * page 2, column 1, line 11 - column 2, line 7 * * claim 1 * * figures 1-6 * | 1-16 | |
| A | US 1 091 031 A (AYDLOTT JAMES M [US]) 24 March 1914 (1914-03-24) * figures 1-4 * | 1-16 | |

The present search report has been drawn up for all claims

| Place of search | Date of completion of the search | Examiner |
|---|---|---|
| Munich | 8 October 2025 | Ikas, Gerhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 2484

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2025

| Patent document cited in search report | | Publication date | Patent family member(s) | | Publication date |
|---|---|---|---|---|---|
| US 2013025891 | A1 | 31-01-2013 | EP | 2550848 A1 | 30-01-2013 |
| | | | US | 2013025891 A1 | 31-01-2013 |
| US 5207278 | A | 04-05-1993 | NONE | | |
| US 4819734 | A | 11-04-1989 | NONE | | |
| US 9357687 | B2 | 07-06-2016 | EP | 2966957 A1 | 20-01-2016 |
| | | | EP | 2966958 A1 | 20-01-2016 |
| | | | US | 2014262366 A1 | 18-09-2014 |
| | | | US | 2014262367 A1 | 18-09-2014 |
| | | | US | 2017042080 A1 | 16-02-2017 |
| | | | WO | 2014145632 A1 | 18-09-2014 |
| | | | WO | 2014145656 A1 | 18-09-2014 |
| US 3802513 | A | 09-04-1974 | GB | 1381196 A | 22-01-1975 |
| | | | US | 3802513 A | 09-04-1974 |
| | | | ZA | 726410 B | 27-06-1973 |
| WO 02094000 | A1 | 28-11-2002 | NONE | | |
| US 2068828 | A | 26-01-1937 | NONE | | |
| US 1091031 | A | 24-03-1914 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5207378 A
- US 4819734 A
- US 9357687 B2
- US 3802513 A
- WO 02094000 A1
- US 2068328 A
- US 1091031 A